# EUROPEAN PATENT SPECIFICATION

(11) **EP 2 534 615 B1**
(45) Date of publication and mention of the grant of the patent: **01.10.2014**
(21) Application number: 10727191.8
(22) Date of filing: 11.02.2010
(51) Int. Cl.: G06K 19/077, H01Q 1/22, H01Q 1/44, H01Q 13/10

(54) **RUGGEDIZED RADIO FREQUENCY IDENTIFICATION TAG**
ROBUSTES RFID TAG
ÉTIQUETTE RFID À ROBUSTESSE ÉLEVÉE

(43) Date of publication of application: 19.12.2012
(73) Proprietor: Soundcraft, Inc., Chatsworth, CA 91311-6112 (US)
(72) Inventor: CASDEN, Martin, S., Calabasas CA 91302 (US)
(74) Representative: Viering, Jentschura & Partner Patent- und Rechtsanwälte
(86) International application number: PCT/US2010/023934
(87) International publication number: WO 2011/099973

(56) References cited:
- EP-A1- 1 308 883
- US-A1- 2009 273 446

## Description

This invention pertains to the field of radio frequency identification (RFID) devices and more particularly concerns a RFID transponder tag readable by an RFID reader device. The tag is contained in and electrically connected to a mechanically rugged and electrically conductive tag housing shaped and configured to also define a radio frequency antenna for the transponder tag.

RFID tags are devices used as identification tokens or keys to actuate RFID readers, and generally consist of a radio frequency transponder module connected to a radio frequency antenna. The antenna may be a wire coil or may consist of one or more printed circuit loops. Typically, the transponder module and antenna are encapsulated in plastic for durability, such as in a plastic card. Existing plastic encapsulated RFID tags, while durable for use in operating doorways, elevators and garage gates in normal office, industrial and residential applications, are not sufficiently rugged for certain applications where such tags may be subject to a much greater degree of abuse, impact and mechanical wear, for example, in military applications such as soldier's personal tags worn on his or her person. A need exists for more robust RFID tags better suited for rugged environments.

From the US patent application publication US 2009/273446 an antenna is known that is made up of an outer conductive pipe and an inner center conductor, and the RFID transponder chip is connected to both of these elements. This US patent application publication represents the basis for the preamble of claim 1.

From the European patent application EP 1 308 883 a housing structure for an RFID tag is known where an entire RFID transponder is enclosed in a sealed glass capsule which also contains a wire coil antenna. There is no connection to the protective outside housing and the exterior housing does not function as an antenna.

It is an object of the invention to create a more robust RFID tag that is better suited for use in rugged environments.

This and other objects are achieved by the features in claim 1. Preferred embodiments are claimed in the dependent claims 2-8.

A ruggedized RFID tag is provided having a metal tag housing which is slit or slotted to define a radio frequency antenna, such as a half turn antenna, and has a RFID transponder circuit in the tag housing operatively connected with the antenna. An antenna matching circuit may be provided for operatively interconnecting the transponder circuit with the antenna. The tag housing may be of steel, aluminum or other mechanically strong and at least partially electrically conductive material, including metals, metallic alloys or nonmetallic materials or combination of materials, metals and nonmetallic materials.

In one embodiment the metal tag housing comprises two housing portions joined mechanically and electrically to each other and containing therebetween the RFID transponder. For example, the metal housing portions can be both slotted to define the antenna, and the metal housing portions can be mechanically and electrically joined by crimping together along the edges of the housing portions. Electrically insulating material such as epoxy may be provided in each slot for closing the slot against entry of foreign matter into the tag housing.

### Brief Description of the Drawings

Fig. 1 is a typical electrical block diagram of the ruggedized RFID tag according to this invention;
Fig. 2 is an exploded perspective view showing the main components of a typical ruggedized RFID tag according to this invention;
Fig. 3 is a close up view of the RFID transponder module of the tag of Fig. 2;
Fig. 4 is a perspective view of the assembled tag of Fig. 2 showing how the lip of the bottom housing portion is crimped over the top housing portion and also indicating the location of the RFID transponder circuit in phantom lining; and
Fig. 5 is a cross section taken along line 5-5 in Fig. 4 showing how the RFID module is captive between the housing portions and the elastomeric connectors contact the inside surface of the top housing portion for interconnecting the module to the antenna defined by the housing.

### Detailed Description of the Preferred Embodiments

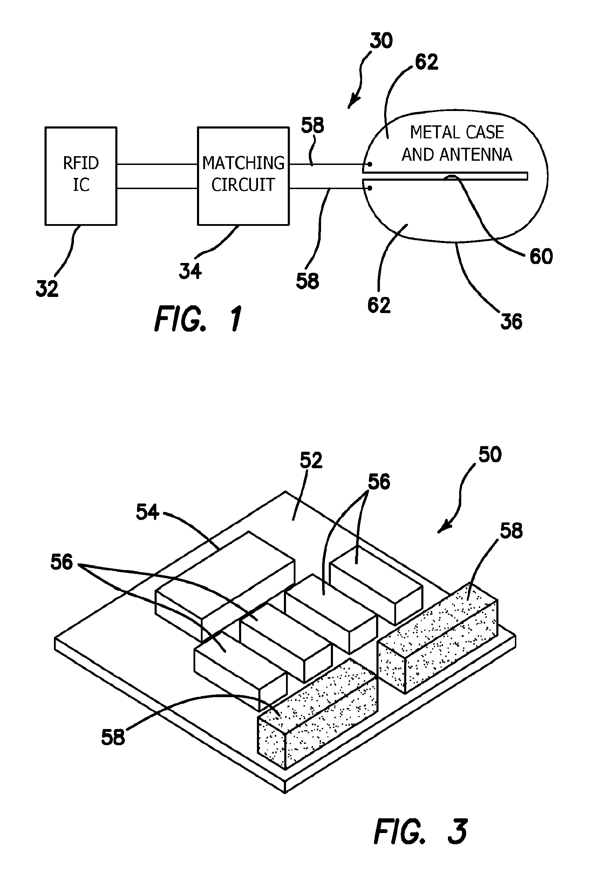

The ruggedized RFID tag 30 according to this invention is illustrated in Fig.s 1 through 5 of the drawings. Fig. 1 shows in block diagram form the electrical circuit of RFID tag 30, including an RFID transponder circuit 32 connected via an antenna matching circuit 34 and antenna connectors 58 to a radio frequency antenna 36.

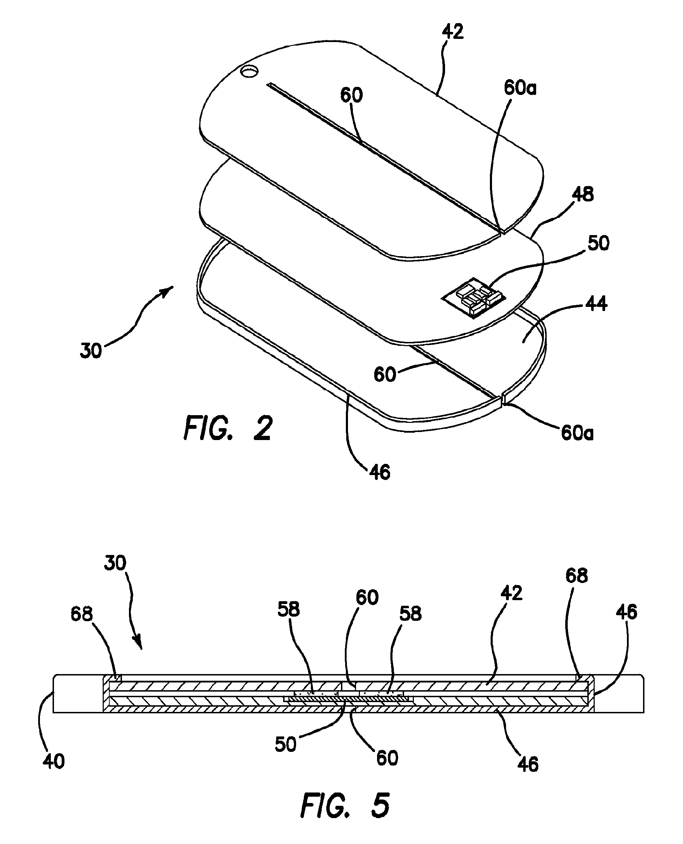

Fig. 2 shows in exploded relationship the main physical components of ruggedized RFID tag 30. Tag 30 has a tag housing 40 comprised of two housing portions, a top housing portion 42 and a bottom housing portion 44. The two housing portions 42, 44 in the illustrated embodiment are flat plates, one of which has a raised lip 46 extending about the edge of the plate.

An electrically insulating spacer plate 48 is contained between housing portions 42, 44 and within raised lip 46. Spacer plate 48 carries an RFID transponder module 50 which includes the RFID transponder circuit 32 and the antenna matching circuit 34.

In the presently preferred embodiment both top and bottom housing portions 42, 44 are metallic, for example, of steel, aluminum or any other mechanically strong metal or alloy with sufficient electrical conductivity for purposes of this application. The insulating spacer 48 may be of ABS (Acrylonitrile Butadiene Styrene), PVC (Polyvinyl chloride), nylon, ceramic or any electrically and mechanically stable electrical insulator.

As seen in Fig. 3, transponder module 50 has a substrate 52 on which are mounted the electrical and electronic components which together make up the RFID transponder circuit 32 and antenna matching circuit 34. The transponder circuit 32 is an integrated circuit die 54, while antenna matching circuit 34 is comprised of matching circuit components 56, which typically are surface mount capacitors. The output of antenna matching circuit 34 terminates in connections to a pair of elastomeric connectors 58 mounted on substrate 52. These connections may be by way of conductive traces on substrate 52 or by other suitable means.

Each of the top and bottom housing portions 42, 44 are slit to define a radio frequency antenna 36. In the illustrated embodiment, housing portions are slit by means of a center slot 60 extending partially along a longitudinal dimension of the housing portions and open at one end of each housing portion to divide and define two equal lobes 62 on each housing portion 42, 44 to form antenna 36.

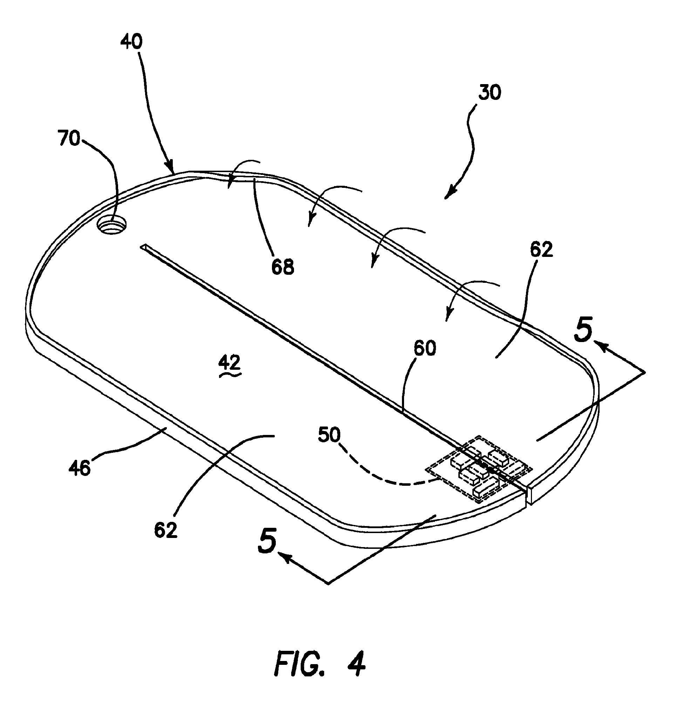

In an assembled condition of tag 30 depicted in Fig.s 4 and 5 the top and bottom housing portions 42, 44 are joined electrically and mechanically to each other, for example, by mechanically crimping the raised lip 46 of the bottom housing portion over the top housing portion 44. The crimp 68 suggested by the arrows in Fig. 4 establishes an electrical connection extending along the crimped together edges of the housing portions 42, 44 and also makes a strong mechanical joint between the two housing portions. Other methods of mechanically joining and electrically connecting the housing portions 42, 44 , such as welding or soldering, among others, may also be used. The top and bottom housing portions 42, 44 are joined with the corresponding slots 60 overlaid in register with each other, that is, with the open ends 60a of slots 60 located on the same end of the tag housing 40, so that electrically the stacked slots 60 extend through the thickness of the assembled tag housing, and the two electrically connected slotted housing portions 42, 44, i.e. the tag housing, acts as a single radio frequency antenna 36. The slots 60 define a half turn radio frequency antenna 36 which is driven via the antenna matching circuit 34, so that the tag housing 40 also becomes the antenna 36 for the RFID transponder 32 contained in the housing. The tag housing 40 thus serves the dual function of mechanically containing and protecting the RFID transponder 32 and of receiving and radiating RFID radio frequency signals between RFID transponder 32 and a suitable RFID tag reader unit.

In an assembled condition of the tag 30, the spacer plate 48 lies on the bottom housing portion 42 within raised lip 46. The substrate 52 is affixed to the spacer plate 40 by suitable means, such as an adhesive. The top housing portion 42 lies over the spacer plate 48 and within raised lip 46 of the bottom housing portion 44. The two housing portions 42, 44 are assembled with the spacer 48 in-between to form a three layer stack, as best seen in Fig. 5. In the assembled condition the inside surface 64 of top housing portion 44 presses down on the two elastomeric connectors 50, so that each connector 50 establishes an electrical connection between one output side of the antenna matching circuit 34 and a corresponding lobe 62 of the antenna defined by top housing portion 42. The elastomeric connectors 50 may be commercially available silicone elastomeric connectors of a type well known in the field.

In the assembled tag 30 it will be desirable in most applications to fill the slots 60 with a nonconductive but durable material, such as epoxy, to seal the interior of the tag 30 against entry of moisture and foreign matter. Alternatively, raised ridges may be formed integrally with the spacer plate 48 such that the raised ridges align with and fill the slots when the top and bottom housing portions 42, 44 are stacked with the spacer plate 48 between them, thereby closing the slots against entry of foreign matter. In one form of the invention a hole 70 is provided through the housing 40 for passing a neck chain, bracelet, key chain or the like, if the tag 30 is to be hung and worn on the person of the tag user.

In one embodiment, the dimensions of tag housing 40 may be 0.5 inch wide or wider, 1.0 inch long or longer, and 0.1 inch thick. In other embodiments, the tag housing may be between 0.3 inches and 2 inches in width, between 0.5 inch and 3 inches in length, and between 0.05 and 0.25 inch in thickness. Still larger tag dimensions may be found suitable for certain applications, even double or triple the preceding dimensions, for example.

The ruggedized tag 30 of this invention is suitable for RFID modules and circuits operating at the RFID radio frequency of 13.56 MHz. However, it may be adapted for operation at other frequencies as well, with appropriate adjustment of the antenna matching circuit 34 and configuration of antenna 36. The design and construction of antenna matching circuit 34 is well understood in the RFID field and need not be explained in greater detail here.

The housing portions 42, 44 may be of materials other than metal provided at least a part of one housing portion is electrically conductive so as to define a radio frequency antenna operative at the relevant RFID frequency. For example, it is contemplated that bottom housing portion 44 could be of a mechanically strong but non conductive material, such as a hard ceramic, and only the top housing portion is metallic and slit, slotted or otherwise shaped for defining an antenna. Antenna 36 may take forms other than the half turn antenna shown in the drawings, and by appropriate slitting, slotting, cutting or shaping of the tag housing an antenna having one or two turns or a spiral antenna could be defined in, on or by tag housing 40. It is also contemplated that both housing portions could be of a nonconductive but mechanically rugged material such as a hard ceramic, and a metallic or otherwise conductive layer deposited or applied to the interior and/or exterior of one or both housing portions so as to define antenna 36.

Other methods and means for making the electrical connection between the radio frequency transponder output and the antenna may be used in addition to or in lieu of silicone elastomeric connectors. For example, conductive epoxy may be used for this purpose, among other possibilities.

In the illustrated embodiment the housing portions 42, 44 are flat or planar with the exception of the lip 46 along the edge of housing portion 44, and generally rectangular with rounded corners, resulting in a thin flat tag assembly which can be suspended, for example on a neck chain and worn comfortably. However, the ruggedized tag 30 of this invention is not limited to the particular shape and configuration of housing portions 42, 44 shown in the drawings.

While particular embodiments of the invention have been described and illustrated for purposes of clarity and example, it will be understood that many changes, substitutions and modifications will be apparent to those having only ordinary skill in the art without thereby departing from the scope of the invention as defined by the following claims.

## Claims

1. A RFID tag (30) comprising a tag housing (40) at least partially of electrically conductive material and a RFID transponder (50) in said tag housing (40) operatively connected with an antenna (36), **characterized by** said tag housing (40) being slotted to define said antenna (36).

2. The RFID tag of Claim 1, **characterized in that** said tag housing (40) comprises two housing portions (42, 44) joined mechanically and electrically to each other and containing therebetween said transponder (50).

3. The RFID tag of Claim 2, **characterized in that** said housing portions (42, 44) are both slotted.

4. The RFID tag of Claim 2, **characterized in that** said housing portions (42, 44) are mechanically crimped to each other.

5. The RFID tag according to any of the preceding claims, **characterized in that** said antenna (36) is a radio frequency antenna (36) integral with said housing, the RFID transponder comprises an RFID transponder circuit (32) contained in said tag housing (40), and a matching circuit (34) for operatively interconnecting said transponder (50) with said antenna (36) is provided.

6. The RFID tag of Claim 2, **characterized in that** a slot (60) is cut in each of said housing portions (42, 44) for defining said radio frequency antenna (36).

7. The RFID tag of Claim 6, **characterized by** electrically insulating material in said slot for closing said slot (60) against entry of foreign matter into said tag housing (40).

8. The RFID tag according to any of the preceding claims, **characterized in that** said tag housing (40) at least partially of electrically conductive material is a metal tag housing (40).

## Patentansprüche

1. RFID-Anhängeretikett (30), aufweisend ein Anhängeretikettgehäuse (40) zumindest teilweise aus elektrisch leitendem Material, und einen RFID-Transponder (50), der in dem Anhängeretikettgehäuse (40) mit einer Antenne (36) wirksam verbunden ist, **dadurch gekennzeichnet, dass** das Anhängeretikettgehäuse (40) geschlitzt ist, um die Antenne (36) zu definieren.

2. RFID-Anhängeretikett nach Anspruch 1, **dadurch gekennzeichnet, dass** das Anhängeretikettgehäuse (40) zwei Gehäuseteile (42, 44) aufweist, die mechanisch und elektrisch miteinander verbunden sind und dazwischen den Transponder (50) aufnehmen.

3. RFID-Anhängeretikett nach Anspruch 2, **dadurch gekennzeichnet, dass** die Gehäuseteile (42, 44) beide geschlitzt sind.

4. RFID-Anhängeretikett nach Anspruch 2, **dadurch gekennzeichnet, dass** die Gehäuseteile (42, 44) mechanisch miteinander vercrimpt sind.

5. RFID-Anhängeretikett nach einem der vorhergehenden Ansprüche, **dadurch gekennzeichnet, dass** die Antenne (36) eine mit dem Gehäuse einstückige Radiofrequenzantenne (36) ist, der RFID-Transponder einen RFID-Transponderschaltkreis (32) aufweist, der in dem Anhängeretikettgehäuse (40) aufgenommen ist, und ein Abstimmungsschaltkreis (34) zum wirksamen Verbinden des Transponders (50) mit der Antenne (36) vorgesehen ist.

6. RFID-Anhängeretikett nach Anspruch 2, **dadurch gekennzeichnet, dass** ein Schlitz (60) in jedem der Gehäuseteile (42, 44) zum Definieren der Radiofrequenzantenne (36) eingeschnitten ist.

7. RFID-Anhängeretikett nach Anspruch 6, **gekennzeichnet durch** elektrisch isolierendes Material in dem Schlitz zum Verschließen des Schlitzes (60) gegen Eintreten eines Fremdkörpers in das Anhängeretikettgehäuse (40).

8. RFID-Anhängeretikett nach einem der vorhergehenden Ansprüche, **dadurch gekennzeichnet, dass** das Anhängeretikettgehäuse (40) zumindest teilweise aus elektrisch leitendem Material ein Metall-Anhängeretikettgehäuse (40) ist.

## Revendications

1. Etiquette RFID (30) comprenant un logement d'étiquette (40) constitué au moins partiellement d'un matériau conducteur électriquement et un transpondeur RFID (50) dans ledit logement d'étiquette (40) fonctionnellement connecté à une antenne (36), **caractérisé en ce que** ledit logement d'étiquette (40) comprend une fente pour définir ladite antenne (36).

2. Etiquette RFID selon la revendication 1, **caractérisée en ce que** ledit logement d'étiquette (40) comprend deux parties de logement (42, 44) jointes mécaniquement et électriquement l'une à l'autre et contenant entre elles ledit transpondeur (50).

3. Etiquette RFID selon la revendication 2, **caractérisée en ce que** lesdites parties de logement (42, 44) comprennent toutes deux une fente.

4. Etiquette RFID selon la revendication 2, **caractérisée en ce que** lesdites parties de logement (42, 44) sont serties mécaniquement l'une à l'autre.

5. Etiquette RFID selon l'une quelconque des revendications précédentes, **caractérisée en ce que** ladite antenne (36) est une antenne radiofréquence (36) d'un seul tenant avec ledit logement, le transpondeur RFID comprend un circuit de transpondeur RFID (32) contenu dans ledit logement d'étiquette (40), et un circuit d'adaptation (34) destiné à interconnecter fonctionnellement ledit transpondeur (50) avec ladite antenne (36) est prévu.

6. Etiquette RFID selon la revendication 2, **caractérisée en ce qu'**une fente (60) est découpée dans chacune desdites parties de logement (42, 44) pour définir ladite antenne radiofréquence (36).

7. Etiquette RFID selon la revendication 6, **caractérisée en ce qu'**elle comprend un matériau isolant électriquement dans ladite fente pour fermer ladite fente (60) à l'entrée de matière étrangère dans ledit logement d'étiquette (40).

8. Etiquette RFID selon l'une quelconque des revendications précédentes, **caractérisée en ce que** ledit logement d'étiquette (40) constitué au moins partiellement d'un matériau conducteur électriquement est un logement d'étiquette métallique (40).
